# EUROPÄISCHE PATENTANMELDUNG

(11) **EP 0 833 175 A2**
(43) Veröffentlichungstag der Anmeldung: **01.04.1998**
(21) Anmeldenummer: 97116742.4
(22) Anmeldetag: 25.09.1997
(51) Int. Cl.: G02B 6/42

(54) **Optoelektronisches Modul zur bidirektionalen optischen Datenübertragung**

(30) Priorität: 30.09.1996 DE 19640423
(71) Anmelder: SIEMENS AKTIENGESELLSCHAFT, 80333 München (DE)
(72) Erfinder: Späth, Werner, 83607 Holzkirchen (DE)

(57) **Zusammenfassung**

Optoelektronisches Modul zur bidirektionalen optischen Datenübertragung, bei dem als Strahlteilereinrichtung (4) ein Formkörper (14) vorgesehen ist, der im wesentlichen aus einem für die ausgesandte Strahlung (7) und die empfangene Strahlung (13) durchlässigen Material besteht und in den eine Strahlteilerschicht (10) eingebettet ist. Ein Sendebauelement (2), ein Empfangsbauelement (3) und ein Strahlungsfokussiermittel (8) sind vorteilhafterweise direkt mit dem Formkörper (14) verbunden und mit einer Vergußumhüllung (35) versehen.

## Beschreibung

Die Erfindung bezieht sich auf ein optoelektronisches Modul zur bidirektionalen optischen Datenübertragung insbesondere mittels eines einzigen Lichtwellenleiters, bei dem ein Sendebauelement zum Aussenden von Strahlung, ein Empfangsbauelement zum Empfangen von Strahlung, eine Strahlteilereinrichtung mit einer Strahlteilerschicht und ein Strahlungsfokussiermittel zum Fokussieren von Strahlung derart ausgebildet und zueinander angeordnet sind, daß im Betrieb des optoelektronischen Moduls zumindest ein Teil einer von dem Sendebauelement ausgesandten Strahlung in eine optisch an das optoelektronische Modul angekoppelte optische Vorrichtung, insbesondere in einen Lichtwellenleiter, eingekoppelt wird und daß zumindest ein Teil einer aus der optischen Vorrichtung ausgekoppelten, empfangenen Strahlung in das Empfangsbauelement eingekoppelt wird.

Ein derartiges Modul ist beispielsweise aus der europäischen Patentanmeldung EP 664 585 bekannt. Hierin ist ein Sende- und Empfangsmodul für eine bidirektionale optische Nachrichten- und Signalübertragung beschrieben. Bei diesem bekannten Modul ist ein Laserchip auf einem gemeinsamen Träger zwischen zwei Trägerteilen angeordnet, deren den Resonatorflächen des Laserchips benachbarte Seitenflächen mit Spiegelschichten versehen und zu den Resonatorflächen in einem Winkel von 45° geneigt sind. Eine von dem Laserchip parallel zur Oberseite des gemeinsamen Trägers ausgesandte Strahlung wird von einer dieser Seitenflächen um 90° in Richtung einer auf dem Trägerteil befestigten Linsenkoppeloptik umgelenkt und mittels dieser in einen Lichtwellenleiter eingekoppelt. Eine von dem Lichtwellenleiter ausgekoppelte Strahlung für die die Spiegelschichten und das Material der Trägerteile sowie des gemeinsamen Trägers zumindest teilweise durchlässig ist, wird von einer unterhalb des gemeinsamen Trägers angeordneten Fotodiode empfangen. Die Vorrichtung, bestehend aus Laserchip, Fotodiode, gemeinsamer Träger und Trägerteile ist in ein hermetisch dichtes Metallgehäuse mit einem Fenster eingebaut.

Die Montage der einzelnen Bestandteile eines derart aufgebauten optoelektronischen Moduls ist sehr aufwendig. Sie erfordert eine große Anzahl von Verfahrensschritten, die Justage der einzelnen Bestandteile zueinander ist schwierig und das Metallgehäuse ist sehr teuer. Außerdem können aufgrund des Luftspaltes zwischen der Linse und der Spiegelschicht große Reflexionsverluste auftreten.

Der Erfindung liegt die Aufgabe zugrunde, ein optoelektronisches Modul der eingangs genannten Art zu entwickeln, das einen möglichst geringen Montageaufwand erfordert, eine möglichst einfache Justierung der einzelnen Komponenten zueinander ermöglicht und geringe Reflexionsverluste aufweist.

Diese Aufgabe wird durch ein optoelektronisches Modul mit den Merkmalen des Anspruches 1 gelöst. Vorteilhafte Ausführungsformen und Weiterbildungen des erfindungsgemäßen optoelektronischen Moduls sind Gegenstand der Unteransprüche 2 bis 16.

Erfindungsgemäß ist bei dem optoelektronischen Modul der eingangs genannten Art ein Zwischenraum zwischen einer Sendebauelement-Strahlenaustrittsfläche des Sendebauelements und der Strahlteilerschicht, ein Zwischenraum zwischen einer Empfangsbauelement-Strahleneintrittsfläche des Empfangsbauelements und der Strahlteilerschicht und ein Zwischenraum zwischen einer Strahleneintritts- und Strahlenaustrittsfläche des Strahlungsfokussiermittels und der Strahlteilerschicht jeweils mit mindestens einem strahlungsdurchlässigen festen oder zähflüssigen Medium gefüllt, sind zumindest das Sendebauelement, das Empfangsbauelement und die Strahlteilereinrichtung mit einer gemeinsamen Vergußumhüllung versehen und ist mit der das Sendebauelement, das Empfangsbauelement und die Strahlteilereinrichtung aufweisenden funktionellen Einheit ein elektrische Anschlußeinrichtung (Leiterrahmen, Leadframe) mit elektrischen Anschlußfahnen verbunden, an die das Sendebauelement und das Empfangsbauelement elektrisch angeschlossen sind.

Unter Sendebauelement-Strahlenaustrittsfläche ist diejenige Seitenfläche des Sendebauelements zu verstehen, durch die der größte Teil einer in dem Sendebauelement erzeugten Strahlung aus diesem austritt. Ebenso ist als Empfangsbauelement-Strahleneintrittsfläche diejenige Seitenfläche des Empfangsbauelements gemeint, durch die eine von dem Empfangsbauelement zu empfangende Strahlung einzukoppeln ist. Als Strahleneintritts- und Strahlenaustrittsfläche des Strahlungsfokussiermittels ist diejenige Seitenfläche des Strahlungsfokussiermittels gemeint, durch die die von dem Sendebauelement ausgesandte Strahlung in das Strahlungsfokussiermittel eindringt und durch die eine von dem Strahlungsfokussiermittel aus der optischen Vorrichtung empfangene Strahlung aus dem Strahlungsfokussiermittel austritt.

Eine bevorzugten Ausführungsform des erfindungsgemäßen otpoelektronischen Moduls weist folgende weitere Merkmale auf: Als Strahlteilereinrichtung ist ein Formkörper vorgesehen, der mindestens eine erste Seitenfläche, eine zweite Seitenfläche und eine dritte Seitenfläche aufweist, der im wesentlichen aus einem für die ausgesandte Strahlung und die empfangene Strahlung durchlässigen Material besteht und in den die Strahlteilerschicht eingebettet ist. Die erste Seitenfläche und die zweite Seitenfläche sind zueinander geneigt, stehen insbesondere senkrecht zueinander. Ebenso sind die dritte Seitenfläche und die zweite Seitenfläche oder die dritte Seitenfläche und die erste Seitenfläche zueinander geneigt, stehen insbesondere senkrecht zueinander. Die erste Seitenfläche und die dritte Seitenfläche bzw. die zweite Seitenfläche und die dritte Seitenfläche sind gegenüberliegende Seitenflächen des Formkörpers und liegen insbesondere parallel zueinander.

Die Sendebauelement-Strahlenaustrittsfläche ist der ersten Seitenfläche des Formkörpers zugewandt und liegt an dieser an oder ist mit dieser mittels eines strahlungsdurchlässigen Verbindungsmittels verbunden. Weiterhin ist die Empfangsbauelement-Strahleneintrittsfläche der zweiten Seitenfläche des Formkörpers zugewandt und liegt an dieser an oder ist mit dieser mittels eines strahlungsdurchlässigen Verbindungsmittels verbunden. Die Strahleneintritts- und Strahlenaustrittsfläche des Strahlungsfokussiermittels ist der dritten Seitenfläche des Formkörpers zugewandt und liegt an dieser an oder ist mit dieser mittels eines strahlungsdurchlässigen Verbindungsmittels verbunden.

Diese Gestaltung der Strahlteilereinrichtung als Formteil hat den besonderen Vorteil, daß dessen Seitenflächen als Bezugs- und Justageflächen für sämtliche eingangs genannten Komponenten des optoelektronischen Moduls genutzt werden können. Ein weiterer besonderer Vorteil der soeben beschriebenen vorteilhaften Ausführungsform des erfindungsgemäßen optoelektronischen Moduls ist sein sehr geringer Platzbedarf.

Als Verbindungsmittel dient beispielsweise jeweils ein strahlungsdurchlässiges Medium, wie z. B. transparentes Kunstharz, das eventuell vorhandene Spalte zwischen den einzelnen Flächen ausfüllt. Besonders vorteilhaft ist, wenn die Sendebauelement-Strahlenaustrittsfläche einen physikalischen Kontakt zur ersten Seitenfläche aufweist, d. h., wenn der Abstand zwischen Sendebauelement-Strahlenaustrittsfläche und erster Seitenfläche kleiner oder gleich einem Zehntel der Wellenlänge der ausgesandten Strahlung ist. Idealerweise liegt die Sendebauelement-Strahlenaustrittsfläche auf der ersten Seitenfläche auf. Analoges gilt für die Empfangsbauelement-Strahleneintrittsfläche und die Strahleneintritts- und Strahlenaustrittsfläche des Strahlungsfokussiermittels. Ein derart aufgebautes erfindungsgemäßes optoelektronisches Modul weist vorteilhafterweise nur sehr geringe innere Reflexionsverluste auf.

Bei einer weiteren vorteilhaften Weiterbildung des erfindungsgemäßen optoelektronischen Moduls ist die Strahlteilereinrichtung aus mindestens zwei zusammengefügten optischen Prismen gefertigt und ist die Strahlteilerschicht zwischen den beiden optischen Prismen angeordnet. Dadurch ist vorteilhafterweise für die Strahlteilereinrichtung ein einfaches und somit kostengünstiges Herstellungsverfahren für große Stückzahlen realisierbar.

Bei einer besonders bevorzugten Ausführungsform des erfindungsgemäßen otpoelektronischen Moduls hat die Strahlteilereinrichtung die Form eines Quaders, liegt die Strahlteilerschicht in einer diagonalen Schnittfläche des Quaders und weist eine senkrecht zur Strahlteilerschicht liegende Schnittfläche des Quaders die Form eines Rechtecks, insbesondere die Form eines Quadrats auf. Derartige sogenannte Prismenwürfel sind vorteilhafterweise besonders einfach in großen Stückzahlen herstellbar.

Bei einer weiteren bevorzugten Weiterbildung des erfindungsgemäßen otpoelektronischen Moduls weist das Strahlungsfokussiermittel ein Trägerteil auf, auf dem die Strahlteilereinrichtung und das Sendebauelement befestigt sind. Das Trägerteil besteht im wesentlichen aus einem für die ausgesandte Strahlung und die empfangene Strahlung durchlässigen Material und das Sendebauelement und das Strahlungsfokussiermittel sind auf gegenüberliegenden Seiten des Trägerteiles angeordnet. Dadurch läßt sich vorteilhafterweise insbesondere die Baugröße des opotelektronischen Moduls stark verringern und sind insbesondere die Strahlungsverluste im optoelektronischen Modul weiter verringert. Bei einer besonders bevorzugten Ausführungsform dieser vorteilhaften Weiterbildung des optoelektronischen Moduls ist das Trägerteil zusammen mit dem Strahlungsfokussiermittel einstückig ausgebildet.

Eine weiterhin bevorzugte Ausführungsform des erfindungsgemäßen optoelektronischen Moduls weist eine Monitordiode auf, die eine einer vierten Seitenfläche des Formkörpers zugewandte Monitordiodenstrahleneintrittsfläche aufweist. Hierbei ist mit Monitordiodenstrahleneintrittsfläche wiederum diejenige Seitenfläche der Monitordiode gemeint, durch die eine von der Monitordiode zu detektierende Strahlung in diese eindringt. Auch die Monitordiode ist vorteilhafterweise von der gemeinsamen Vergußumhüllung umschlossen.

Die erste Seitenfläche und die vierte Seitenfläche des Formkörpers sind so angeordnet, daß im Betrieb des optoelektronischen Moduls zumindest ein Teil einer durch die Strahlteilerschicht hindurchtretenden ausgesandten Strahlung auf die Monitordiodenstrahleneintrittsfläche trifft. Sie stellen beispielsweise gegenüberliegende Seitenflächen des Formkörpers dar und liegen insbesondere parallel zueinander. In diesem Fall sind beispielsweise auch die zweite und die dritte Seitenfläche einander gegenüberliegende Seitenflächen des Formkörpers, die insbesondere parallel zueinander sind. Vorteilhafterweise ist die Monitordiode ebenfalls auf dem Trägerteil befestigt und ein eventuell vorhandener Spalt zwischen der Monitordiodenstrahleneintrittsfläche und der vierten Seitenfläche des Formkörpers mit einem transparenten Material gefüllt.

Eine besonders bevorzugte Weiterbildung des erfindungsgemäßen optoelektronischen Moduls, bei dem der Formkörper die Form eines Quaders aufweist, die Strahlteilerschicht in einer diagonalen Schnittfläche des Quaders liegt, eine senkrecht zur Strahlteilerschicht liegende Schnittfläche des Quaders die Form eines Rechtecks, insbesondere eines Quadrats aufweist, und bei dem die zweite und die dritte Seitenfläche einander gegenüberliegende Seitenflächen des Formkörpers sind, so daß das Strahlungsfokussiermittel und das Empfangsbauelement auf einander gegenüberliegenden Seiten des Formkörpers angeordnet sind, weist die Merkmale auf, daß die Strahlachse der ausgesandten Strahlung und die Strahlachse der empfangenen Strahlung einen Winkel von 90° einschließen, daß die Strahlteilerschicht derart ausgebildet und angeordnet ist, daß sie die ausgesandte Strahlung größtenteils reflektiert, so daß die Strahlachse der reflektierten Strahlung parallel zur Strahlachse der empfangenen Strahlung verläuft und daß sie zumindest einen Teil der empfangenen Strahlung durchläßt, so daß dieser auf die Empfangsbauelement-Strahleintrittsfläche trifft.

Eine andere besonders bevorzugte Weiterbildung des erfindungsgemäßen optoelektronischen Moduls, bei dem der Formkörper die Form eines Quaders aufweist, die Strahlteilerschicht in einer diagonalen Schnittfläche des Quaders liegt, eine senkrecht zur Strahlteilerschicht liegende Schnittfläche des Quaders die Form eines Rechtecks, insbesondere eines Quadrats aufweist und die erste und die dritte Seitenfläche einander gegenüberliegende Seitenflächen des Formkörpers sind, so daß das Strahlungsfokussiermittel und das Sendebauelement auf einander gegenüberliegenden Seiten des Formkörpers angeordnet sind, hat die Merkmale, daß die Strahlachse der ausgesandten Strahlung und die Strahlachse der empfangenen Strahlung im wesentlichen parallel zueinander verlaufen, daß die Strahlteilerschicht derart ausgebildet und angeordnet ist, daß sie einen in die optische Vorrichtung einzukoppelnden Teil der ausgesandten Strahlung durchläßt und die empfangene Strahlung größtenteils reflektiert und zum Empfangsbauelement hin umlenkt.

Besonders vorteilhaft ist weiterhin, wenn zwischen dem Empfangsbauelement und der zweiten Seitenfläche des Formkörpers ein Sperrfilter angeordnet ist, das für die Wellenlänge der ausgesandten Strahlung weitestgehend undurchlässig ist. Dadurch kann insbesondere ein Übersprechen, d. h. eine direkte Übertragung von Signalen aus dem Sendebauelement auf das Empfangsbauelement reduziert werden.

Bei einer weiteren bevorzugten Ausführungsform des erfindungsgemäßen optoelektronischen Moduls, bei dem das Strahlungsfokussiermittel ein Trägerteil aufweist, das mittels eines strahlungsdurchlässigen Verbindungsmittels mit dem Formkörper verbunden ist, das Trägerteil im wesentlichen aus einem für die ausgesandte Strahlung und die empfangene Strahlung durchlässigen Material besteht und das Sendebauelement und die optische Vorrichtung auf einander gegenüberliegenden Seiten des Trägerteiles angeordnet sind, sind das Sendebauelement, der Formkörper und ggf. die Monitordiode an einer ersten Hauptfläche des Trägerteiles befestigt, ist das Trägerteil mit einer der ersten Hauptfläche gegenüberliegenden zweiten Hauptfläche auf einer Trägerplatte des Leiterrahmens befestigt und weist die Trägerplatte eine Bohrung auf, über, unter oder in der das Strahlungsfokussiermittel angeordnet ist.

Bei einer besonderen Weiterbildung dieser Ausführungsform sind das Sendebauelement, das Empfangsbauelement, die Strahlteilereinrichtung, das Strahlungsfokussiermittel,das Trägerteil, die Trägerplatte und Teilbereiche der elektrischen Anschlußfahnen und ggf. die Monitordiode von der Vergußumhüllung umschlossen und weist diese auf der dem Trägerteil gegenüberliegenden Seite der Trägerplatte im Bereich der Bohrung eine bis zur Trägerplatte reichende Ausnehmung auf. Bei einem derartigen erfindungsgemäßen optoelektronischen Modul kann vorteilhafterweise im Bereich der Bohrung eine Lichtwellenleiteranschlußeinrichtung auf die Trägerplatte montiert sein.

Bei einer weiteren besonderen Weiterbildung dieser Ausführungsform ragen die elektrischen Anschlußfahnen durch eine einzige Seitenfläche oder durch einander gegenüberliegende Seitenflächen der Vergußumhüllung aus dieser heraus. Alle elektrischen Anschlußfahnen sind außerhalb der Vergußumhüllung mindestens einmal um 90° gleichförmig in dieselbe Richtung gebogen bzw. sind zuerst um 90° gleichförmig in dieselbe Richtung und dann gleichförmig entweder um 90° nach innen in Richtung zur Bauteilmitte oder nach außen vom Bauteil weg gebogen, so daß das optoelektronische Modul eine oberflächenmontierbare Bauform aufweist.

Ein bevorzugtes Verfahren zum gleichzeitigen Herstellen von mindestens zwei optoelektronischen Modulen in Nutzenmontage, bei denen das Strahlungsfokussiermittel jeweils ein Trägerteil aufweist, auf dem die Strahlteilereinrichtung und das Sendebauelement befestigt sind, bei denen das Trägerteil im wesentlichen aus einem für die ausgesandte Strahlung und die empfangene Strahlung durchlässigen Material besteht und bei denen das Sendebauelement und das Strahlungsfokussiermittel auf einander gegenüberliegenden Seiten des Trägerteiles angeordnet sind, weist folgende Verfahrensschritte auf:
a) Herstellen einer Scheibe, bestehend aus einem für die ausgesandte Strahlung und die empfangene Strahlung durchlässigen Material,
b) Ausbilden oder Aufbringen von mindestens zwei Strahlungsfokussiermitteln auf einer Hauptfläche der Scheibe, derart, daß zwischen zwei Strahlungsfokussiermitteln jeweils ein Zwischenraum vorhanden ist,
c) Aufbringen eines Prismenbarrens, in den entlang seiner Längsmittelachse eine auf einer seiner diagonalen Ebenen liegende Strahlteilerschicht eingebettet ist, auf die Scheibe, derart, daß die Strahlteilerschicht über den Strahlungsfokussiermitteln zu liegen kommt,
d) Aufbringen von mindestens zwei Sendebauelementen auf die Scheibe, derart, daß die Sendebauelement-Strahlenaustrittsflächen der Sendebauelemente jeweils einer ersten Seitenfläche des Prismenbarrens zugewandt sind und daß jedem Sendebauelement ein einziges der Strahlungsfokussiermittel zugeordnet ist,
e) Aufbringen von mindestens zwei Empfangsbauelementen auf den Prismenbarren, derart, daß jedem Empfangsbauelement ein einziges der Strahlungsfokussiermittel zugeordnet ist,
f) Falls vorgesehen, Aufbringen von mindestens zwei Monitordioden auf die Scheibe, derart, daß jeder Monitordiode ein einziges der Sendebauelemente zugeordnet ist,
g) Durchtrennen der Scheibe und ggf. des Prismenbarrens jeweils im Zwischenraum zwischen zwei Strahlungsfokussiermitteln, derart, daß voneinander getrennte funktionelle Einheiten entstehen, von denen jede ein Trägerteil, eine Strahlteilereinrichtung, ein Sendebauelement, ggf. eine Monitordiode, ein Empfangsbauelement und ein Strahlungsfokussiermittel aufweist,
h) Montage der funktionellen Einheiten auf ein Leiterband, das eine Mehrzahl von Trägerplatten mit zugeordneten elektrischen Anschlußfahnen aufweist, wobei für jede funktionelle Einheit eine separate Trägerplatte vorgesehen ist,
i) Umhüllen der funktionellen Einheiten einschließlich der zugehörigen Trägerplatte und Teilbereiche der zugehörigen elektrischen Anschlußfahnen mit der Vergußumhüllung und
j) Durchtrennen des Leiterbandes jeweils zwischen zwei optoelektronischen Modulen.

Der Vollständigkeit halber sei an dieser Stelle erwähnt, daß in der Halbleitertechnik das gleichzeitige Herstellen einer Mehrzahl von gleichartigen Bauteilen im Scheibenverbund mit Nutzenmontage bezeichnet wird.

Das erfindungsgemäße optoelektronische Modul und das bevorzugte Herstellungsverfahren wird im folgenden anhand von 3 Ausführungsbeispielen in Verbindung mit den Figuren 1 bis 6 näher erläutert. Es zeigen:
Figur 1 eine schematische Schnittansicht eines ersten Ausführungsbeispieles des erfindungsgemäßen optoelektronischen Moduls
Figur 2 eine schematische Schnittansicht eines zweiten Ausführungsbeispieles eines erfindungsgemäßen optoelektronischen Moduls,
Figur 3 eine schematische Schnittansicht durch ein drittes Ausführungsbeispiels eines erfindungsgemäßen optoelektronischen Moduls
Figur 4 eine schematische Darstellung einer perspektivischen Ansicht eines Leiterrahmens für ein erfindungsgemäßes optoelektronisches Modul
Figur 5 eine schematische Darstellung einer perspektivischen Ansicht eines erfindungsgemäßen optoelektronischen Moduls und
Figur 6 eine schematische Darstellung zur Erläuterung eines Verfahrensablaufes zur gleichzeitigen Herstellung einer Mehrzahl von optoelektronischen Modulen gemäß dem Ausführungsbeispiel von Figur 1.

In den Figuren sind gleiche oder gleichwirkende Bestandteile jeweils mit demselben Bezugszeichen versehen.

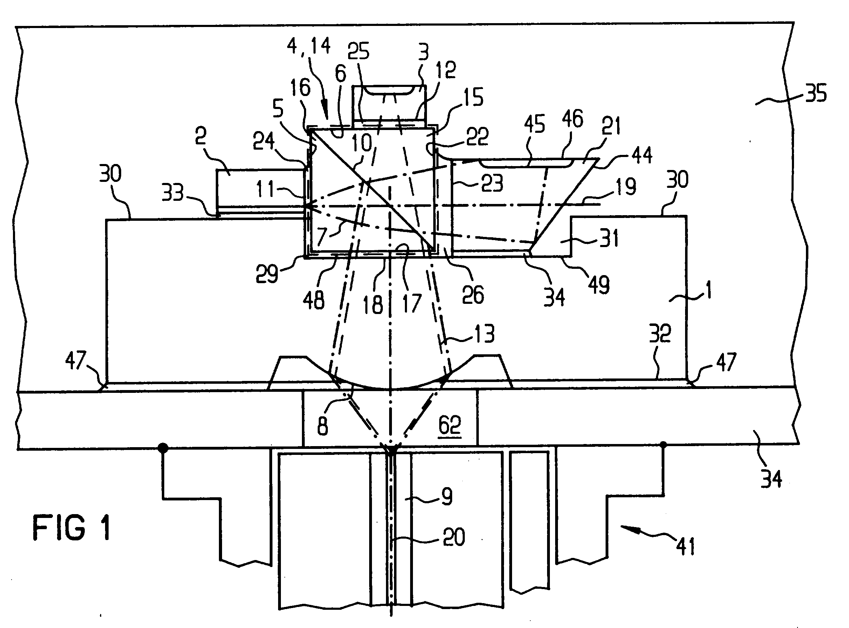

Bei dem erfindungsgemäßen optoelektronischen Modul von Figur 1 ist an einer ersten Hauptfläche 30 eines Trägerteiles 1 eine Ausnehmung 31 und an einer der ersten Hauptfläche 30 gegenüberliegenden zweiten Hauptfläche 32 des Trägerteiles 1 ein Strahlungsfokussiermittel 8 zum Fokussieren von Strahlung, in diesem Fall eine sphärische oder asphärische Sammellinse, ausgebildet. Auf der Bodenfläche 49 der Ausnehmung 31 ist mittels eines strahlungsdurchlässigen Verbindungsmittels 29, z. B. ein transparenter Klebstoff, als Strahlteilereinrichtung 4 ein Prismenwürfel 14 befestigt. Der Prismenwürfel 14 besteht aus zwei zusammengefügten optischen Prismen 15,16, zwischen denen die Strahlteilerschicht 10 angeordnet ist. Die Strahlteilerschicht 10 liegt auf einer diagonalen Ebene des Prismenwürfels 14. Selbstverständlich ist dieses Ausführungsbeispiel nicht ausschließlich auf die Verwendung eines Prismenwürfels 14 beschränkt. Es kann ebenso anstelle des Prismenwürfels beispielsweise ein Prismenquader mit einer quadratischen oder rechteckigen senkrecht zur Strahlteilerschicht 10 liegenden Schnittfläche verwendet sein.

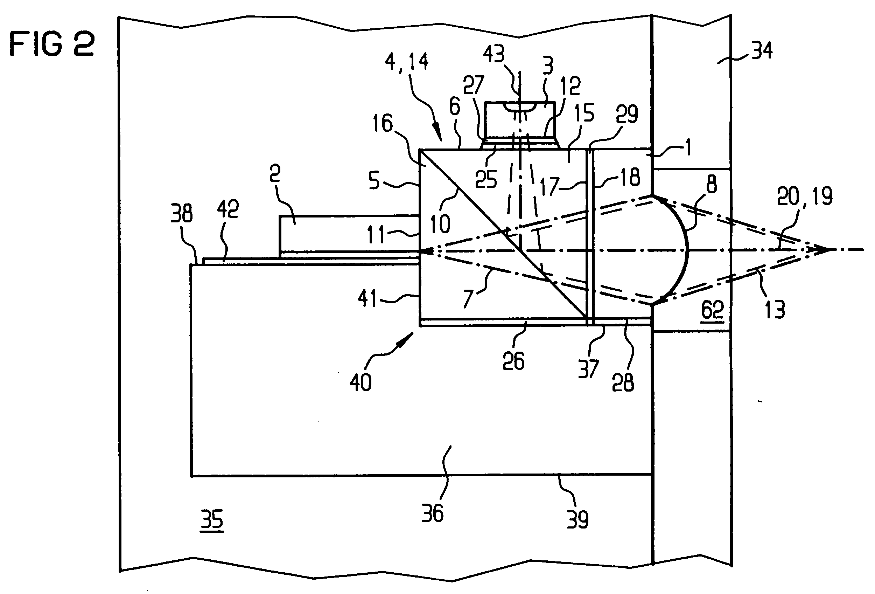

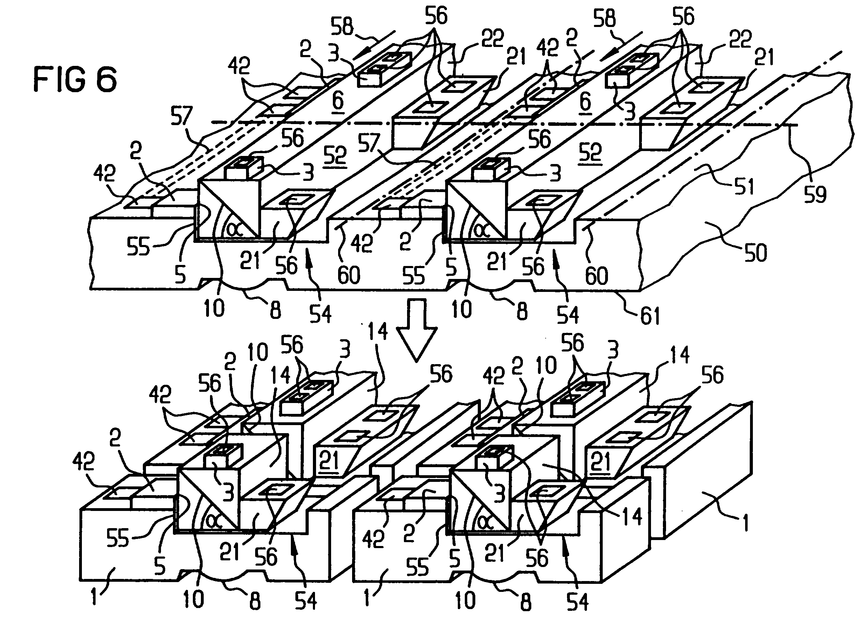

Auf der ersten Hauptfläche 30 des Trägerteiles 1 ist benachbart zu einer ersten Seitenfläche 5 des Prismenwürfels 14 ein Sendebauelement 2, beispielsweise ein Fabry-Perot- oder ein DFB-Laser, also ein Kantenemitter, derart befestigt, daß eine Sendebauelement-Strahlenaustrittsfläche 11 des Sendebauelements 2 parallel zur ersten Seitenfläche 5 des Prismenwürfels 14 liegt. Als Verbindungsmittel 33 zwischen dem Sendebauelement 2 und dem Trägerteil 1 ist beispielsweise ein Lot oder ein Klebstoff verwendet. Optional sind, wie in Figur 2 und Figur 6 gezeigt, auf der ersten Hauptfläche 30 des Trägerteiles 1 strukturierte Metallisierungsschichten 42 aufgebracht, die mit elektrischen Anschlüssen des Sendebauelements 2 verbunden sind und die als externe elektrische Anschlüsse für das Sendebauelement 2 dienen. Das Sendebauelement 2 kann dazu direkt mit seinen elektrischen Anschlüssen auf den Metallisierungschichten 42 aufliegen und mit diesen beispielsweise mittels eines Lotes elektrisch leitend verbunden sein.

Die Sendebauelement-Strahlenaustrittsfläche 11 kann wahlweise direkt auf der ersten Seitenfläche 5 des Prismenwürfels aufliegen oder auch in einem Abstand dazu angeordnet sein. Im zweiten Fall kann der Zwischenraum zwischen der Strahlenaustrittsfläche 11 und der ersten Seitenfläche 5 des Prismenwürfels 14, wie in Figur 1 gezeigt, mit einem strahlungsdurchlässigen Koppelmedium 24 gefüllt sein, dessen Brechungsindex gegenüber dem von Luft erhöht ist. Dadurch können Reflexionsverluste aufgrund stark unterschiedlicher Brechungsindizes von Luft und Halbleitermaterial bzw. Material des Prismenwürfels verringert werden. Idealerweise weist die Sendebauelement-Strahlenaustrittsfläche 11 zur ersten Seitenfläche 5 physikalischen Kontakt auf.

Auf einer senkrecht zur ersten Seitenfläche 5 und parallel zur ersten Hauptfläche 30 des Trägerteiles 1 liegenden zweiten Seitenfläche 6 des Prismenwürfels 14 ist mittels eines strahlungsdurchlässigen Verbindungsmittels 25 ein Empfangsbauelement 3, z. B. eine Fotodiode, befestigt. Die Empfangsbauelement-Strahleneintrittsfläche 12 des Empfangsbauelements 3 ist der zweiten Seitenfläche 6 zugewandt. Idealerweise weist die Empfangsbauelement-Strahlenaustrittsfläche 12 zur zweiten Seitenfläche 6 wiederum physikalischen Kontakt auf. Der Prismenwürfel 14 ist derart angeordnet, daß die Strahlteilerschicht 10 in einer Ebene liegt, die zwischen dem Sendebauelement 2 und dem Empfangsbauelement 3 angeordnet ist und die mit der ersten Hauptfläche 30 des Trägerteiles 1 einen Winkel von 45° einschließt.

Auf der dem Sendebauelement 2 gegenüberliegenden Seite des Prismenwürfel 14 ist ebenfalls in der Ausnehmung 31 des Trägerteiles 1 mittels eines Verbindungsmittels 34, z. B. ein metallisches Lot oder ein Klebstoff, eine Monitordiode 21 befestigt. Diese Monitordiode 21 dient im wesentlichen dazu, die von dem Sendebauelement 2 ausgesandte Strahlung 7 auf ihre Wellenlänge hin zu überprüfen. Dazu ist die Strahlteilerschicht 10 so ausgebildet, daß sie einen Teil der ausgesandten Strahlung 7 durchläßt.

Die Monitordiode 21 ist so angeordnet, daß eine Monitordioden-Strahleneintrittsfläche 23 einer der ersten Seitenfläche 5 gegenüberliegenden vierten Seitenfläche 22 des Prismenwürfels 14 zugewandt ist. Ein Zwischenraum zwischen der vierten Seitenfläche 22 des Prismenwürfels 14 und der Monitordioden-Strahleneintrittsfläche 23 ist mittels eines transparenten Koppelmediums 26, z. B. ein transparentes Epoxidharz, gefüllt. Dadurch können Reflexionsverluste der Strahlung auf dem Weg zur Monitordiode 21 verringert werden.

Eine der Monitordioden-Strahleneintrittsfläche 23 gegenüberliegende Seitenfläche 44 der Monitordiode 21 ist derart abgeschrägt, daß sie zumindest einen Teil der in die Monitordiode 21 eindringenden Strahlung zu einem Strahlung detektierenden pn-Übergang 45 der Monitordiode 21 hin reflektiert. Sie schließt mit einer dem pn-Übergang 45 am nächsten liegenden Seitenfläche 46 der Monitordiode 21 einen Winkel ein, der kleiner als 90° ist. Zusätzlich kann sie beispielsweise mit einer reflexionssteigernden Schicht versehen sein.

Das Sendebauelement 2, das Empfangsbauelement 3, der Prismenwürfel 14, und das Strahlungsfokussiermittel 8, sind derart ausgebildet und zueinander angeordnet, daß im Betrieb des optotelektronischen Moduls zumindest ein Teil einer von dem Sendebauelement 2 ausgesandten Strahlung 7 nach Durchtritt durch das Strahlungsfokussiermittel 8 in eine, in Ausbreitungsrichtung der ausgesandten Strahlung 7 betrachtet, dem Strahlungsfokussiermittel 8 nachgeordnete optische Vorrichtung 9 eingekoppelt wird und daß zumindest ein Teil einer aus der optischen Vorrichtung 9 ausgekoppelten, empfangenen Strahlung 13 nach Durchtritt durch das Strahlungsfokussiermittel 8 und durch den Prismenwürfel 14 in das Empfangsbauelement 3 eingekoppelt wird.

Dazu ist der Prismenwürfel 14 aus einem für die ausgesandte Strahlung 7 und die empfangene Strahlung 13 durchlässigen Material gefertigt (z. B. Quarz, Borsilikatglas, Saphir oder Halbleitermaterial (man vergleiche dazu beispielsweise die unten für das Trägerteil angegebenen Halbleitermaterialien)). Die Strahlteilerschicht 10 ist derart ausgebildet, daß sie die ausgesandte Strahlung 7 größtenteils reflektiert und die empfangene Strahlung 13 soweit als möglich durchläßt. Derartige Strahlteilerschichten 10, sind in der optischen Technik bekannt, z. B. 3dB-Teiler oder WDM(Wellenlängen-Divisions-Multiplex)-Filter, und werden von daher an dieser Stelle nicht näher erläutert. Optional ist auf die Seitenflächen 5,6,17,22 des Prismenwürfels eine Antireflexbeschichtung 48 (gestrichelt eingezeichnet) aufgebracht.

Die Strahlachse 19 der ausgesandten Strahlung 7 und die Strahlachse 20 der empfangenen Strahlung 13 stehen bei diesem Ausführungsbeispiel senkrecht aufeinander.

Der Vollständigkeit halber sei an dieser Stelle erwähnt, daß die ausgesandte Strahlung 7 und die empfangene Strahlung 13 vorteilhafterweise unterschiedliche Wellenlängen λ aufweisen. Dies gilt für alle in dieser Anmeldung beschriebenen Ausführungsbeispiele des erfindungsgemäßen optoelektronischen Moduls.

Die optische Vorrichtung 9 ist beispielsweise, wie in der Figur 1 angedeutet, ein Lichtwellenleiter, eine Linsenanordnung oder ein weiteres optoelektronisches Modul usw..

Das Trägerteil 1 einschließlich dem Strahlungsfokussiermittel 8 besteht aus einem Material, das ebenfalls sowohl für die ausgesandte Strahlung 7 als auch für die empfangene Strahlung 13 durchlässig ist. Hierzu eignet sich beispielsweise Glas, Kunststoff, Saphir, Diamant oder ein Halbleitermaterial, das für die ausgesandte Strahlung 7 und für die empfangene Strahlung 13 durchlässig ist. Für Wellenlängen λ > 400 nm kann diesbezüglich beispielsweise SiC, für λ > 550 nm GaP, für λ > 900 nm GaAs und für λ > 1100 nm kann Silizium verwendet sein.

Das Strahlungsfokussiermittel 8 kann beispielsweise eine Sammellinse mit einer sphärischen oder asphärischen Oberfläche sein, die mittels Ätzen oder Schleifen hergestellt ist. Ebenso kann als Strahlungsfokussiermittel 8 ein diffraktives optisches Element, ein holographisches optisches Element oder eine Fresnellinse verwendet sein, die mittels Ätzen, Schleifen oder Fräsen hergestellt ist. Die Ausnehmung 31 ist beispielsweise mittels Ätzen oder Fräsen hergestellt.

Die Ausnehmung 31 kann alternativ auch mittels zweier separat hergestellter Formteile, die auf dem Trägerteil 1 mit einem Abstand zueinander befestigt sind, realisiert sein. Ebenso kann auch das Strahlungsfokussiermittel 8 alternativ zum oben Beschriebenen separat hergestellt und am Trägerteil 1, z. B. mittels eines strahlungsdurchlässigen Lotes oder Klebstoffes befestigt sein. Besteht das Trägerteil 1 aus α-Si und das Strahlungsfokussiermittel 8 aus Glas, so können diese beiden Komponenten auch mittels anodischem Bonden verbunden sein.

Das Trägerteil 1 ist mit den darauf befestigten Einzelteilen (Sendebauelement 2, Prismenwürfel 14 mit Empfangsbauelement 3, Strahlungsfokussiermittel 8 und ggf. Monitordiode mittels eines Verbindungsmittels 47 (z. B. Lot oder Klebstoff) auf einer Trägerplatte 34 befestigt, derart, daß die zweite Hauptfläche 32 des Trägerteiles 1 der Trägerplatte 34 zugewandt ist.

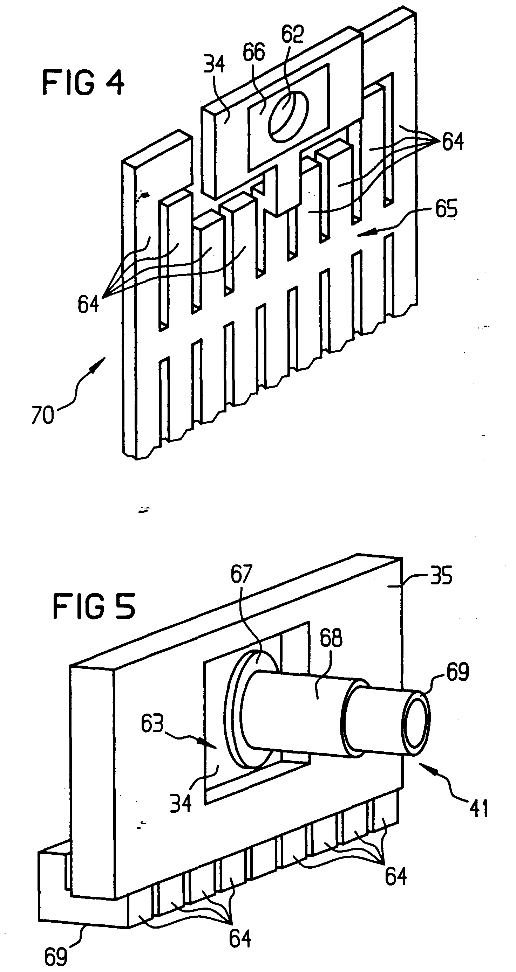

Die Trägerplatte 34 ist beispielsweise eine Montageplatte eines Leiterrahmens, z. B. ein Cu-Leadframe, mit elektrischen Anschlußfahnen 64 und weist eine Bohrung 62 auf, über oder in der das Strahlungsfokussiermittel 8 angeordnet ist (man vergleiche hierzu die Figur 4). Auf der dem Trägerteil 1 gegenüberliegenden Seite der Trägerplatte 34 ist eine Lichtwellenleiteranschlußvorrichtung 41 mit einem Lichtwellenleiter als optische Vorrichtung 9 angeordnet, die beispielsweise mittels Schweißen, Löten oder Kleben an der Trägerplatte 34 befestigt ist. Der Lichtwellenleiter ist dabei so über der Bohrung 62 angeordnet, daß die ausgesandte Strahlung 7 von dem Strahlungsfokussiermittel 8 im wesentlichen auf eine Endfläche des Lichtwellenleiters fokussiert wird.

Die gesamte, die aktiven Komponenten des optoelektronischen Moduls, d. h. das Sendebauelement 2, das Empfangsbauelement 3, und die Monitordiode 21, und den Prismenwürfel 14 aufweisende funktionelle Einheit ist mit einer im wesentlichen aus Kunststoff oder einem anderen geeigneten Vergußmaterial bestehenden Vergußumhüllung 35, beispielsweise mit Epoxidharz oder mit einem anderen geeigneten Kunststoff, versehen. Das Vergußmaterial kann beispielsweise zur Anpassung des thermischen Ausdehnungskoeffizienten mit einem geeigneten Füllstoff, z. B. Metallpulver, Metalloxidpulver, Metallcarbonatpulver oder Metallsilikatpulver, gefüllt sein.

Ein derartig augebildetes optoelektronisches Modul stellt eine sehr einfache Ausführungsform eines Bidirektionalen Sende- und Empfangsmodul zur optischen Nachrichtenübertragung mittels eines einzigen Lichtwellenleiters dar. Es kann vorteilhafterweise, wie in Figur 5 gezeigt, sehr einfach als oberflächenmontierbares (SMT-Montage) Bauelement ausgeführt sein. Innerhalb der Vergußumhüllung 35 können im Bedarfsfall noch zusätzliche elektronische Bauelemente enthalten sein, wie z. B. ein Vorverstärker für die Fotodiode, Lasertreiber usw.. Selbstverständlich kann für hohe mechanische Beanspruchung zusätzlich zur Vergußumhüllung 35 ein hermetisch dichtes Metallgehäuse mit einem optischen Fenster verwendet sein.

Das in Figur 2 dargestellte Ausführungsbeispiel des erfindungsgemäßen optoelektronischen Moduls unterscheidet sich von dem Ausführungsbeispiel gemäß Figur 1 insbesondere dadurch, daß das Strahlungsfokussiermittel 8 auf der dem Sendebauelement 2 gegenüberliegenden Seite des Prismenwürfels 14 angeordnet ist und daß die Strahlteilerschicht 10 derart ausgebildet, daß sie die ausgesandte Strahlung 7 größtenteils durchläßt und daß sie die empfangene Strahlung 13 größtenteils reflektiert. Die Strahlachse 19 der ausgesandten Strahlung 7 und die Strahlachse 20 der empfangenen Strahlung 13 verlaufen parallel zueinander, liegen insbesondere aufeinander. Die Strahlachse 43 des an der Strahlteilerschicht 10 reflektierten Teiles der empfangenen Strahlung 13 steht senkrecht auf der Strahlachse 19 der empfangenen Strahlung 13.

Das Sendebauelement 2, der Prismenwürfel 14 und das Strahlungsfokussiermittel 8 sind beispielsweise mittels Kleben oder Löten auf einem gemeinsamen Trägerelement 36 befestigt, das beispielsweise im wesentlichen aus Silizium besteht. Das Trägerelement 36 weist eine Stufe 40 auf, die eine erste Montagefläche 37 und eine zu dieser parallel liegende zweite Montagefläche 38 voneinander trennt.

Der Prismenwürfel 14 ist auf der ersten Montagefläche 37 benachbart zu der zu den Montageflächen 37,38 senkrecht stehenden Stirnfläche 41 der Stufe 40 angeordnet. Auf der ersten Montagefläche 37 ist weiterhin mittels eines Verbindungsmittels 28 das Strahlungsfokussiermittel 8 befestigt, derart, daß dessen Strahleneintritts- und Strahlenaustrittsfläche 18 parallel zur dritten Seitenfläche 17 des Prismenwürfels 14 liegt und dieser zugewandt ist. In diesem Ausführungsbeispiel ist zwischen dem Strahlungsfokussiermittel 8 und dem Prismenwürfel 14 ein Spalt, der mit einem transparenten Koppelmedium 26, z. B. Kunstharz, gefüllt ist. Ebenso kann natürlich auch das Strahlungsfokussiermittel 8 physikalischen Kontakt zum Prismenwürfel 14 aufweisen idealerweise unmittelbar am Prismenwürfel 14 anliegen.

Auf der zweiten Montagefläche 38 ist das Sendebauelement 2 befestigt, derart, daß dessen Strahlenaustrittsfläche 11 dem Prismenwürfel 14 zugewandt ist, und unmittelbar an dessen erster Seitenfläche 5 anliegt. Zwischen dem Sendebauelement 2 und dem Prismenwürfel 14 kann natürlich ebenso wie bei dem Ausführungsbeispiel von Figur 1 ein Spalt vorhanden sein, der zur Reflexionsminderung mit einem transparenten Koppelmedium 24, z. B. Kunstharz, gefüllt ist, oder physikalischer Kontakt vorliegen.

Auf der zweiten Montagefläche 38 sind Metallisierungsschichten 42 aufgebracht. Diese sind mit elektrischen Kontakten des Sendebauelements 2 elektrisch leitend verbunden. Dazu sind beispielsweise das Sendebauelement 2 und die Metallisierungsschichten 42 derart ausgebildet, daß elektrische Kontakte des Sendebauelements 2 und die Metallisierungschichten 42 aufeinanderliegen und beispielsweise mittels eines metallischen Lotes oder mittels eines elektrisch leitenden Klebstoffes miteinander verbunden sind. Die Metallisierungschichten 42 dienen dann gleichzeitig als externe elektrische Anschlüsse für das Sendebauelement 2, die dann beispielsweise mittels Bonddrähten mit einem Leadframe verbunden sind. Ebenso können natürlich auch elektrische Kontakte des Sendebauelements 2 mittels Bonddrähte mit den Metallisierungsschichten 42 oder direkt mit einem Leadframe verbunden sein. Analoges gilt für das Ausführungsbeispiel von Figur 1. Auch dort können auf dem Trägerteil 1 entsprechende Metallisierungsschichten 42 vorgesehen sein.

Desweiteren ist bei dem Ausführungsbeispiel von Figur 2 zwischen dem auf dem Prismenwürfel 14 angeordneten Empfangsbauelement 3 und dem Prismenwürfel 14 ein Sperrfilter 27 angeordnet, das für die Wellenlänge der ausgesandten Strahlung 7 weitestgehend undurchlässig ist. Dadurch kann die Übersprechdämpfung des optoelektronischen Moduls gesenkt werden. Unter 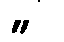 Übersprechen" ist eine direkte Übertragung der vom Sendebauelement 2 ausgesandten Signale auf das Empfangsbauelement 3 zu verstehen. Das Sperrfilter 27 kann optional auf der Empfangsbauelement-Strahleneintrittsfläche 12 oder auf der zweiten Seitenfläche 6 des Prismenwürfels 14 aufgebracht sein. Desweiteren kann, falls aus optischen Gründen nötig, zwischen der Empfangsbauelement-Strahleneintrittsfläche 12 und dem Prismenwürfel 14 eine Sammellinse angeordnet sein.

Ist als Sendebauelement 2 eine Laserdiode verwendet, so kann diese mit der aktiven Seite nach oben (up-side up) oder mit der aktiven Zone nach unten (up-side down), d. h. in Richtung Trägerelement 36, montiert sein. Im zweiten Fall muß die Dicke des Laserdiodensubstrats sehr genau an die Lage der Strahlteilerschicht 10 angepaßt sein. Dies ist mit einem hohen Montage- und Justieraufwand verbunden. Im ersten Fall geht dagegen nur die Dicke der Epitaxieschicht der Laserdiode und die Dicke von gegebenenfalls vorhandenen elektrischen Anschlußmetallisierungsschichten 42 auf dem Trägerelement 36 in diese Betrachtung ein. Herstellungstoleranzen können hier sehr einfach im Mikrometerbereich und darunter gehalten werden. Die Justage ist dadurch deutlich vereinfacht. Analoges gilt natürlich auch für das oben beschriebene Ausführungsbeispiel von Figur 1.

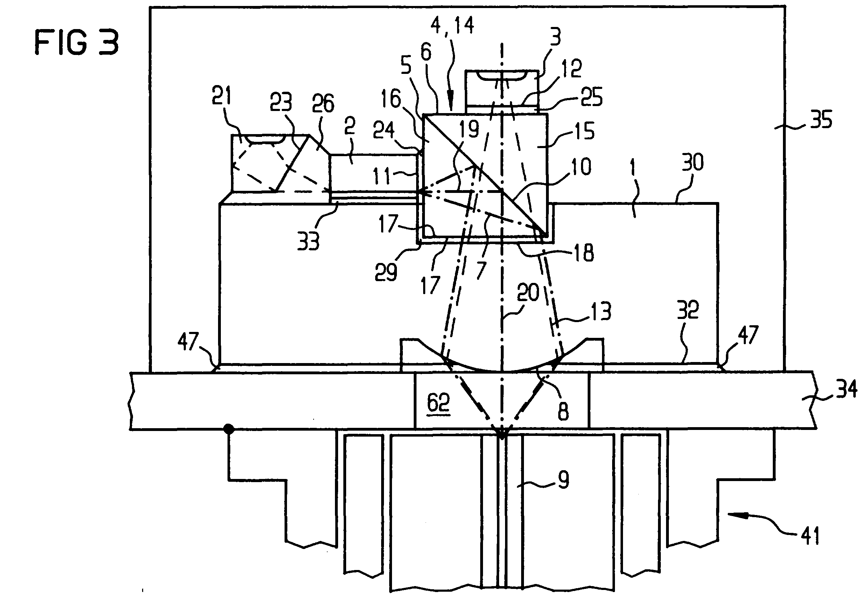

Ist auch bei diesem Ausführungsbeispiel eine Monitordiode 21 vorgesehen, so kann diese, wie bei dem Ausführungsbeispiel von Figur 3, vom Prismenwürfel 14 aus gesehen, hinter dem Sendebauelement 2 auf der zweiten Montagefläche 38 angeordnet sein. Ein Teil der im Sendebauelement 2 erzeugten Strahlung muß dann natürlich nach hinten ausgekoppelt werden, was bei Verwendung einer Laserdiode als Sendebauelement 2 mit einer Verschlechterung der Laserparameter verbunden ist, da auch der hintere Resonatorspiegel teildurchlässig ausgebildet sein muß. Diesen Nachteil weist das Ausführungsbeispiel von Figur 1 nicht auf; hier kann der hintere Spiegel einer als Sendebauelement 2 eingesetzten Laserdiode auf hohe Reflexion ausgelegt sein.

Bei dem Ausführungsbeispiel von Figur 3 ist im Unterschied zu dem Ausführungsbeispiel von Figur 1 ,wie weiter oben bereits angedeutet, die Monitordiode 21 von dem Prismenwürfel 14 aus gesehen hinter, dem Sendebauelement 2 angeordnet. Ansonsten besteht kein wesentlicher Unterschied zwischen diesen beiden Ausführungsbeispielen.

In Figur 4 ist ein Leiterrahmen gezeigt, wie er beispielsweise für das erfindungsgemäße optoelektronische Modul verwendet sein kann. Dieser Leiterrahmen weist eine Trägerplatte 34 mit einer Bohrung 62 und einer Montagefläche 66 für die funktionelle Einheit auf. Von der Trägerplatte 34 aus erstrecken sich insgesamt sieben in einer Ebene im wesentlichen parallel zueinander verlaufende elektrische Anschlußfahnen 64, die über einen Steg 65 miteinander verbunden sind. Die mittlere dieser Anschlußfahnen 64, an der die Trägerplatte 34 befestigt ist, weist in der Nähe der Trägerplatte eine Kröpfung auf, so daß die Trägerplatte 34 gegenüber der Ebene der Anschlußfahnen 64 versetzt angeordnet ist. Die zur Trägerplatte 34 hin gerichteten Enden der restlichen, für die elektrischen Anschlüsse der funktionellen Einheit vorgesehenen Anschlußfahnen 64 sind nicht mit der Trägerplatte 34 verbunden. Dieser Leiterrahmen ist beispielsweise ein herkömmliches Cu-Leadframe.

Bei dem in Figur 5 dargestellten erfindungsgemäßen optoelektronischen Modul ist eine funktionelle Einheit, bestehend aus Sendebauelement 2, Empfangsbauelement 3, Prismenwürfel 14, Strahlungsfokussiermittel 8, Trägerteil 1 und ggf. Monitordiode, und ggf. weitere Komponenten (z. B. Vorverstärker usw.) auf der Trägerplatte 34 befestigt. Diese sind zusammen mit der Trägerplatte 34 und Teilbereichen der Anschlußfahnen 64 von einer Vergußumhüllung 35 umschlossen. Auf der der funktionellen Einheit gegenüberliegenden Seite der Trägerplatte 34 weist die Vergußumhüllung 35 eine Ausnehmung 63 auf, die bis auf die Trägerplatte 34 reicht und in der eine Lichtwellenleiteranschlußeinrichtung 41 auf der Trägerplatte 34 befestigt ist.

Diese Lichtwellenleiteranschlußeinrichtung 41 ist beispielsweise ein herkömmlicher Receptacle-Anschluß oder ein Pigtail-Anschluß. Auf die Trägerplatte 34 ist eine Metallhülse 68 mit einem Schweißring 67 aufgeschweißt. In der Metallhülse 68 befindet sich eine Keramikhülse 69 zum exakten Führen einer Lichtleitfaser. Zur Fixierung eines Steckers in axialer Richtung der Lichtleitfaser kann über die Vergußumhüllung 35 eine Befestigungsvorrichtung für den Stecker geschoben sein.

Auf einer Seitenfläche der Vergußumhüllung 35 ragen die Anschlußfahnen 64 heraus. Diese sind außerhalb der Vergußumhüllung 35 gleichförmig zweimal um 90° umgebogen, wobei die erste 90°-Biegung entgegengesetzt zur Erstreckungsrichtung der Lichtwellenleiteranschlußeinrichtung 41 verläuft, die zweite 90°-Biegung zur Bauteilmitte hin verläuft, also wiederum dieselbe Biegungsrichtung aufweist, und zwischen erster und zweiter Biegung ein Abstand vorhanden ist, so daß bei jeder Anschlußfahne 64 eine Löt-Anschlußfläche 69 ausgebildet ist. Der Steg 65 zwischen den benachbarten Anschlußfahnen 64 ist jeweils durchtrennt. Somit ist das erfindungsgemäße optoelektronische Modul auf einfache Weise als SMD-Bauelement ausgebildet.

Bei dem in Figur 6 schematisch dargestellten Verfahrensablauf zum gleichzeitigen Herstellen einer Mehrzahl von erfindungsgemäßen optoelektronischen Modulen gemäß dem Ausführungsbeispiel von Figur 1 wird an einer ersten Hauptfläche 51 einer Scheibe 50 eine Anzahl von in einem Abstand parallel zueinander verlaufenden rechteckigen Nuten 54 hergestellt. Der in Figur 6 gezeigte Ausschnitt der Scheibe 50 weist vier funktionelle Einheiten auf, wobei die beiden vorderen im Schnitt dargestellt sind.

An einer der ersten Hauptfläche 51 gegenüberliegenen zweiten Hauptfläche 61 der Scheibe 50 wird entsprechend einem vorgegebenen Raster eine Anzahl von Strahlungsfokussiermitteln 8 ausgebildet. In diesem Fall sind dies z. B. mittels Ätzen oder Schleifen hergestellte sphärische oder asphärische Linsen. Die Strahlungsfokussiermitteln 8 sind in Reihen angeordnet, die zu den Nuten 54 parallel verlaufenden und diesen senkrecht gegenüberliegen. Die Scheibe 50 besteht aus einem für die ausgesandte Strahlung 7 und die empfangene Strahlung 13 durchlässigen Material. Man vergleiche dazu die Beschreibung zu Figur 1.

In jeder Nut 54 wird benachbart zu einer ersten Nutseitenfläche 55 ein im Querschnitt quadratischer Prismenbarren 52 befestigt. Die erste Nutseitenfläche 55 kann hierbei als Justierbezugsfläche für eine erste Seitenfläche 5 des Prismenbarrens 52 dienen. Jeder Prismenbarren 52 weist eine Strahlteilerschicht 10 auf, die auf einer zu seiner Längsmittelachse parallelen diagonalen Schnittfläche des Prismenbarrens 52 liegt. Der Winkel α zwischen der Strahlteilerschicht 10 und der ersten Hauptfläche 51 der Scheibe 50 beträgt somit 45°.

Besteht der Prismenbarren 52 beispielsweise aus Glas und die Scheibe 50 aus α-Silizium oder umgekehrt, so kann zum Befestigen der Prismenbarren 52 auf der Scheibe 50 anstelle des oben angegebenen Verbindens mittels eines Verbindungsmittels 29 anodisches Bonden eingesetzt werden. Bei dieser Technik werden die zu verbindenden Flächen aufeinander gelegt, beispielsweise auf etwa 450°C aufgeheizt und zwischen Glas und - Silizium eine Spannung von etwa -1000 V angelegt. Diese Verbindungstechnik ist auch dann möglich, wenn auch die Scheibe 50 aus Glas oder irgendeinem anderen Material besteht und an der Verbindungsstelle zum Prismenbarren 52 eine α-Siliziumschicht aufweist. Es müssen lediglich eine Glas- und eine α-Siliziumschicht aufeinanderliegen.

Auf der ersten Hauptfläche 51 der Scheibe 50 wird benachbart zu den ersten Seitenflächen 5 eine Mehrzahl von Sendebauelementen 2 befestigt, derart, daß elektrische Kontakte der Sendebauelemente 2 auf den dafür vorgesehenen auf der ersten Hauptfläche 51 der Scheibe 50 aufgebrachten Metallisierungsschichten 42 zu liegen kommen und mit diesen elektrisch leitend verbunden werden. Hier kann jeweils die Seitenfläche 5 als Justierbezugsfläche für die Sendebauelemente 2 dienen. Die Sendebauelemente 2 werden so angeordnet, daß jedem ein Strahlungsfokussiermittel 8 zugeordnet ist.

Um eine sichere Trennung der p- und n-Kontakte von Laserdioden-Sendebauelementen zu gewährleisten bzw. bei Verwendung von Lasern mit Stegwellenleiter (MCRW-Laser) eine Beschädigung des Steges zu vermeiden, wird vor der Montage der Sendebauelemente 2 jeweils zwischen den Metallisierungsschichten 42 eine Trennungsnut ausgebildet, beispielsweise eingeätzt.

Auf den zweiten Seitenflächen 6 des Prismenbarren 52 wird jeweils eine Mehrzahl von Empfangsbauelementen 3 mit elektrischen Kontakten 56 befestigt. Auch diese sind derart angeordnet, daß jedem ein Strahlungsfokussiermittel 8 zugeordnet ist.

Analog dazu wird jeweils benachbart zu einer der ersten Seitenfläche 5 gegenüberliegenden vierten Seitenfläche 22, in der Nut 54 eine Mehrzahl von Monitordioden 21 mit elektrischen Kontakten 56 befestigt.

Bei Verwendung von Laserdioden als Sendebauelemente 2 können diese mittels Metallisierungsbahnen 57 (in der Figur 4 gestrichelt eingezeichnet) auf der ersten Hauptfläche 51 der Scheibe 50 seriell verschaltet werden, so daß für den sogenannten Burn-In der Laserdioden nur jeweils die beiden äußeren, an den beiden Enden einzelner Laserdiodenzeilen 58 angeordneten Kontaktflächen 42 kontaktiert werden müssen. Die Burn-In für die derselben Laserdiodenzeile 58 zugeordneten Laserdioden kann somit auf besonders einfache Weise gleichzeitig durchgeführt werden. Darüberhinaus können auch die einzelnen Sendebauelemente 2 und Empfangsbauelemente 3 durch Kontaktieren der zugehörigen Metallisierungsschichten 42,56 und Anschließen an einen geeigneten Waferprober im Scheibenverbund, also im Nutzen, auf ihre elektrooptischen Parameter hin gemessen werden. Analoges gilt natürlich auch für die Monitordioden 21.

Nach diesen Verfahrensschritten werden dann die Scheibe 50 und die Prismenbarren 52 entlang von ersten Trennlinien 59, die zwischen den einzelnen Sendebauelementen 2 senkrecht zu den Nuten 54 verlaufen, und die Scheibe 50 entlang von zweiten Trennlinien 60, die jeweils zwischen zwei Nuten 54 verlaufen, durchtrennt. Die so gefertigten jeweils ein Sendebauelement 2, ein Empfangsbauelement 3, eine Monitordiode 21, einen Prismenquader 14 und ein Strahlungsfokussiermittel 8 mit Trägerteil 1 aufweisenden einzelnen Vorrichtungen werden nachfolgend jeweils auf einen Leiterrahmen montiert und mit einer Vergußumhüllung 35 vergossen (man vergleiche dazu die Figuren 4 und 5).

Das oben beschriebene Verfahren läßt sich selbstverständlicherweise unter geringfügigen Abänderungen auch für die beiden weiteren Ausführungsbeispiele von Figur 2 und Figur 3 einsetzen. Es ermöglicht eine kostengünstige Produktion bei gleichzeitig hoher Ausbeute in der Montage und eine 100%-Prüfung aller wichtigen Betriebsparameter des optoelektronischen Moduls im Nutzen, d. h. im Scheibenverbund.

## Patentansprüche

1. Optoelektronisches Modul zur bidirektionalen optischen Datenübertragung, bei dem ein Sendebauelement (2) zum Aussenden von Strahlung, ein Empfangsbauelement (3) zum Empfangen von Strahlung, eine Strahlteilereinrichtung (4) mit einer Strahlteilerschicht (10) und ein Strahlungsfokussiermittel (8) zum Fokussieren von Strahlung derart ausgebildet und zueinander angeordnet sind, daß im Betrieb des optoelektronischen Moduls zumindest ein Teil einer von dem Sendebauelement(2) ausgesandten Strahlung (7) in eine optisch an das optoelektronische Modul angekoppelte optische Vorrichtung (9) eingekoppelt wird und daß zumindest ein Teil einer aus der optischen Vorrichtung (9) ausgekoppelten, empfangenen Strahlung (13) in das Empfangsbauelement (3) eingekoppelt wird, **dadurch gekennzeichnet,** daß ein Zwischenraum zwischen einer Sendebauelement-Strahlenaustrittsfläche (11) des Sendebauelements (2) und der Strahlteilerschicht (10), ein Zwischenraum zwischen einer Empfangsbauelement-Strahleneintrittsfläche (12) des Empfangsbauelements (3) und der Strahlteilerschicht (10) und ein Zwischenraum zwischen einer Strahleneintritts- und Strahlenaustrittsfläche (18) des Strahlungsfokussiermittels (8) und der Strahlteilerschicht (10) jeweils zumindest teilweise mit strahlungsdurchlässigem Material (24+16;25+15;29+16) gefüllt ist, daß zumindest das Sendebauelement (2), das Empfangsbauelement (3) und die Strahlteilereinrichtung (4) mit einer gemeinsamen Vergußumhüllung (35) versehen sind und daß mit der dadurch ausgebildeten, das Sendebauelement (2), das Empfangsbauelement (3) und die Strahlteilereinrichtung (4) aufweisenden funktionellen Einheit ein Leiterrahmen (70) mit elektrischen Anschlußfahnen (64) verbunden ist, an den das Sendebauelement (2) und das Empfangsbauelement (3) elektrisch angeschlossen sind.

2. Optoelektronisches Modul nach Anspruch 1, **dadurch gekennzeichnet,**
daß als Strahlteilereinrichtung (4) ein Formkörper (14) vorgesehen ist, der mindestens eine erste Seitenfläche (5), eine zweite Seitenfläche (6) und eine dritte Seitenfläche (17) aufweist, der im wesentlichen aus einem für die ausgesandte Strahlung (7) und die empfangene Strahlung (13) durchlässigen Material besteht und in den die Strahlteilerschicht (10) eingebettet ist,
daß die erste Seitenfläche (5) und die zweite Seitenfläche (6) zueinander geneigt sind,
daß die dritte Seitenfläche (17) und die zweite Seitenfläche (6) oder die dritte Seitenfläche (17) und die erste Seitenfläche (5) zueinander geneigt sind,
daß die erste Seitenfläche (5) und die dritte Seitenfläche (17) bzw. die zweite Seitenfläche (6) und die dritte Seitenfläche (17) gegenüberliegende Seitenflächen des Formkörpers (14) sind,
daß die Sendebauelement-Strahlenaustrittsfläche (11) der ersten Seitenfläche (5) des Formkörpers (14) zugewandt ist und an dieser anliegt oder mit dieser mittels eines strahlungsdurchlässigen Verbindungsmittels (24) verbunden ist,
daß die Empfangsbauelement-Strahleneintrittsfläche (12) der zweiten Seitenfläche (6) des Formkörpers (14) zugewandt ist und an dieser anliegt oder mit dieser mittels eines strahlungsdurchlässigen Verbindungsmittels (25) verbunden ist,
daß die Strahleneintritts- und Strahlenaustrittsfläche (18) des Strahlungsfokussiermittels (8) der dritten Seitenfläche (17) des Formkörpers (14) zugewandt ist und an dieser anliegt oder mit dieser mittels eines strahlungsdurchlässigen Verbindungsmittels (26) verbunden ist.

3. Optoelektronisches Modul nach Anspruch 2, **dadurch gekennzeichnet,** daß die erste Seitenfläche (5) und die zweite Seitenfläche (6) zueinander senkrecht stehen, daß die dritte Seitenfläche (17) und die zweite Seitenfläche (6) bzw. die dritte Seitenfläche (17) und die erste Seitenfläche (5) zueinander senkrecht stehen und daß die erste Seitenfläche (5) und die dritte Seitenfläche (17) bzw. die zweite Seitenfläche (6) und die dritte Seitenfläche (17) parallel zueinander liegen.

4. Optoelektronisches Modul nach Anspruch 2 oder 3, **dadurch gekennzeichnet,** daß der Formkörper (14) aus mindestens zwei zusammengefügten optischen Prismen (15,16) gefertigt ist und daß zwischen den beiden optischen Prismen (15,16) die Strahlteilerschicht (10) angeordnet ist.

5. Optoelektronisches Modul nach einem der Ansprüche 2 bis 4, **dadurch gekennzeichnet,** daß der Formkörper (14) die Form eines Quaders aufweist, daß die Strahlteilerschicht (10) in einer diagonalen Schnittfläche des Quaders liegt und daß eine senkrecht zur Strahlteilerschicht (10) liegende Schnittfläche des Quaders die Form eines Rechtecks, insbesondere eines Quadrats aufweist.

6. Optoelektronisches Modul nach einem der Ansprüche 1 bis 5, **dadurch gekennzeichnet,** daß das Strahlungsfokussiermittel (8) ein Trägerteil (1) aufweist, das mittels eines strahlungsdurchlässigen Verbindungsmittels (29) mit dem Formkörper (14) verbunden ist, daß das Trägerteil (1) im wesentlichen aus einem für die ausgesandte Strahlung (7) und die empfangene Strahlung (13) durchlässigen Material besteht und daß das Sendebauelement (2) und die optische Vorrichtung (9) auf verschiedenen Seiten des Trägerteiles (1) angeordnet sind.

7. Optoelektronisches Modul nach Anspruch 6, **dadurch gekennzeichnet,** daß auch das Sendebauelement (2) auf dem Trägerteil (1) befestigt ist und daß das Empfangsbauelement (3) auf dem Formkörper (14) befestigt ist.

8. Optoelektronisches Modul nach Anspruch 6 oder 7, **dadurch gekennzeichnet,** daß das Trägerteil (1) zusammen mit dem Strahlungsfokussiermittel (8) einstückig ausgebildet ist.

9. Optoelektronisches Modul nach einem der Ansprüche 1 bis 8, **dadurch gekennzeichnet,** daß eine Monitordiode (21) vorgesehen ist, die eine einer vierten Seitenfläche (22) des Formkörpers (14) zugewandte Monitordiodenstrahleneintrittsfläche (23) aufweist, daß die Stahlteilerschicht (10) derart ausgebildet ist, daß ein Teil der ausgesandten Stahlung (7) auf die Monitordiodenstrahleneintrittsfläche (23) trifft und daß auch die Monitordiode (21) von der Vergußumhüllung (35) umschlossen ist.

10. Optoelektronisches Modul nach Anspruch 2 oder nach Anspruch 2 und einem der Ansprüche 3 bis 8, **dadurch gekennzeichnet,** daß die Strahlachse (19) der ausgesandten Strahlung (7) und die Strahlachse (20) der empfangenen Strahlung (13) im wesentlichen parallel verlaufen, daß die Strahlteilerschicht (10) derart ausgebildet und angeordnet ist, daß sie einen in die optische Vorrichtung (9) einzukoppelnden Teil der ausgesandten Strahlung (7) durchläßt und die empfangene Strahlung (13) größtenteils reflektiert und zum Empfangsbauelement (3) hin umlenkt und daß das Strahlungsfokussiermittel (8) und das Sendebauelement (2) auf gegenüberliegenden Seiten des Formkörpers (14) angeordnet sind bzw. daß die Strahlachse (19) der ausgesandten Strahlung (7) und die Strahlachse (20) der empfangenen Strahlung (13) senkrecht zueindander verlaufen,
daß die Strahlteilerschicht (10) derart ausgebildet und angeordnet ist, daß sie die ausgesandte Strahlung (7) zumindest größtenteils reflektiert, so daß die Strahlachse der reflektierten Strahlung im wesentlichen parallel zur Strahlachse (20) der empfangenen Strahlung (13) verläuft und daß sie zumindest einen Teil der empfangenen Strahlung (13) durchläßt, so daß dieser auf die Empfangsbauelement-Strahleneintrittsfläche (12) trifft.

11. Optoelektronisches Modul nach einem der Ansprüche 1 bis 10, **dadurch gekennzeichnet**, daß zwischen dem Empfangsbauelement (3) und der zweiten Seitenfläche (6) des Formkörpers (14) ein Sperrfilter (27) angordnet ist, das für die Wellenlänge der ausgesandten Strahlung (7) weitestgehend undurchlässig ist.

12. Optoelektronisches Modul nach Anspruch 6 oder nach Anspruch 6 und einem der Ansprüche 7 bis 11, **dadurch gekennzeichnet,** daß das Sendebauelement (2), der Formkörper (14) und ggf. die Monitordiode (21) an einer ersten Hauptfläche (30) des Trägerteiles (1) befestigt sind, daß das Trägerteil (1) mit einer der ersten Hauptfläche (30) gegenüberliegenden zweiten Hauptfläche (32) auf einer Trägerplatte (34) des Leiterrahmens (70) befestigt ist und daß die Trägerplatte (34) eine Bohrung (62) aufweist, über oder in der das Strahlungsfokussiermittel (8) angeordnet ist.

13. Optoelektronisches Modul nach Anspruch 12, **dadurch gekennzeichnet,** daß das Sendebauelement (2), das Empfangsbauelement (3), die Strahlteilereinrichtung (4), das Strahlungsfokussiermittel (8), die Trägerplatte (34), das Trägerteil (1) und Teilbereiche der elektrischen Anschlußfahnen (64) und ggf. die Monitordiode (21) von der Vergußumhüllung (35) umschlossen sind und daß die Vergußumhüllung (35) auf der der funktionellen Anordnung gegenüberliegenden Seite der Trägerplatte (34) im Bereich der Bohrung (62) eine bis zur Trägerplatte (34) reichende Ausnehmung (63) aufweist.

14. Optoelektronisches Modul nach Anspruch 13, **dadurch gekennzeichnet,** daß die elektrischen Anschlußfahnen (64) durch eine einzige Seitenfläche der Vergußumhüllung (35) aus dieser herausragen, daß alle elektrischen Anschlußfahnen (64) außerhalb der Vergußumhüllung (35) mindestens einmal um 90° in dieselbe Richtung gebogen sind, so daß das optoelektronische Modul eine oberflächenmontierbare Bauform aufweist.

15. Optoelektronisches Modul nach Anspruch 13, **dadurch gekennzeichnet,** daß die elektrischen Anschlußfahnen (64) durch einander gegenüberliegende Seitenflächen der Vergußumhüllung (35) aus dieser herausragen, daß alle elektrischen Anschlußfahnen (64) außerhalb der Vergußumhüllung (35) zuerst um 90° in dieselbe Richtung und dann entweder um 90° nach innen in Richtung zur Bauteilmitte oder nach außen vom Bauteil weg gebogen sind, so daß das optoelektronische Modul eine oberflächenmontierbare Bauform aufweist.

16. Optoelektronisches Modul nach Anspruch 13, 14 oder 15, **dadurch gekennzeichnet,** daß in der Ausnehmung (63) auf der Trägerplatte (34) eine Lichtwellenleiteranschlußeinrichtung (41) befestigt ist.
